# EUROPÄISCHE PATENTSCHRIFT

(11) **EP 2 681 378 B1**
(45) Veröffentlichungstag und Bekanntmachung des Hinweises auf die Patenterteilung: **07.08.2019**
(21) Anmeldenummer: 12710671.4
(22) Anmeldetag: 01.03.2012
(51) Int. Cl.: E04F 13/08, E04F 13/16, E04F 13/14, E04F 15/02, E04F 15/08, E04F 15/14, E04F 15/18, E04F 15/20

(54) **Verlegesystem zur Herstellung eines Boden- oder Wandbelags mit einer Verbundplatte, sowie Verfahren zur Herstellung einer solchen Verbundplatte**
Laying system for a floor or wall covering comprising a composite panel and production method for such a composite panel
Système de pose pour un revêtement de sol ou mur avec panneau composite et procédé de fabrication d'un tel panneau composite

(30) Priorität: 01.03.2011 DE 102011004893
(43) Veröffentlichungstag der Anmeldung: 08.01.2014
(73) Patentinhaber: Meyer, Hans, 67063 Ludwigshafen (DE)
(72) Erfinder: DELLA PEPA, Tomas, 67117 Limburgerhof (DE)
(74) Vertreter: Sommer, Peter
(86) Internationale Anmeldenummer: PCT/EP2012/053567
(87) Internationale Veröffentlichungsnummer: WO 2012/117074

(56) Entgegenhaltungen:
- EP-A1- 1 298 262
- EP-A1- 1 298 262
- EP-A2- 0 246 856
- EP-A2- 0 246 856
- EP-A2- 1 607 544
- WO-A1-01/25563
- WO-A1-2004/090257
- WO-A1-2004/090257
- WO-A1-2006/077297
- WO-A1-2006/077297
- WO-A2-2011/115514
- AU-A4- 2010 101 323
- DE-A1-102004 018 550
- DE-A1-102005 021 662
- DE-U1-202009 008 947
- US-B1- 6 660 384

## Beschreibung

### Technisches Gebiet

Die Erfindung betrifft eine Verbundplatte für ein Verlegesystem, insbesondere zur Herstellung eines Boden- oder Wandbelags, aufweisend eine Platte eines Boden- oder Wandbelags und einen an der Verlegeseite der Platte angeordneten Träger. Weiterhin betrifft die Erfindung ein Verbindungsstück für die Verbindung zweier Verbundplatten und ein aus Verbundplatten hergestelltes Verlegesystem sowie ein Verfahren zur Herstellung einer Verbundplatte.

### Stand der Technik

Aus der WO 2006/077297 A1 ist ein Verlegesystem gemäß dem Oberbegriff des Anspruchs 1 bekannt. Aus der DE 101 58 215 A1 ist ein Verlegesystem für Platten zur Erstellung eines Boden-, Wand- oder Deckenbelags bekannt, bei dem die Platten mit Auflagerahmen versehen sind, auf denen die Platten zumindest teilflächig aufliegen. Die Platte und der Auflagerahmen können miteinander verklebt sein und eine Einheit bilden. Nachteilig hierbei ist, dass der Auflagerahmen relativ aufwendig in der Herstellung ist und dass die Platte in ihrer Größe in Bezug auf den Auflagerahmen genau kalibriert sein müssen bzw. dass für eine Vielzahl von Plattengrößen auch eine Vielzahl von dazu passenden Auflagerahmen vorgehalten werden muss.

Auch aus der DE 199 62 812 A1 ist eine Platte bekannt, an der Randprofile angeklebt sind und die zusätzlich an der Unterseite der Platte eine Dämmschicht aufweist.

Aus der DE 39 29 676 C2 ist bekannt, als Trägerplatte für einen Hohlraumboden eine Gipskartonplatte, eine Gipsfaserplatte, eine Spanplatte oder eine Zementfaserplatte zu verwenden, die so steif und dick ist, dass sie begehbar ist. Aus der DE 20 2004 002 966 U1 ist ein Natursteinplattenboden in loser Verlegung bekannt, bei dem in Seitenflächen von Bodenplatten eine Nut enthalten ist und bei dem zwischen benachbarte Bodenplatten ein Fugenabstandshalter aus Kunststoff angeordnet ist, der beidseitig je einen Klemmsteg trägt, die in den Nuten eingeklemmt gehalten sind. Dazu kann ein elastisches Material vorgesehen sein.

Aus der EP 1298262 A1 sind Natursteinpaneele bekannt, die im wesentlichen aus einer Natursteinplatte und einem Träger aus einem Konstruktionswerkstoff bestehen und die Nut und Feder ausgestattet sind.

Auch die US 4,599,841 zeigt einen Fugenabstandshalter zum Einbringen in die in den Seitenflächen benachbarter Bodenplatten angeordneten Nuten.

### Darstellung der Erfindung

Eine Verbundplatte für ein erfindungsgemäßes Verlegesystem, insbesondere zur Herstellung eines Boden- oder Wandbelags, weist eine Platte eines Boden- oder Wandbelags und einen an der Verlegeseite der Platte angeordneten Träger auf, wobei der Träger aus Faserzement besteht.

Unter Faserverbundwerkstoff wird allgemein ein Verbundwerkstoff aus zugfesten organischen oder anorganischen Fasern eingebettet in einen druckfesten organischen oder anorganischen Werkstoff verstanden, wobei die Zugfestigkeit des Werkstoffs im Vergleich zu der Zugfestigkeit der Fasern wesentlich geringer ist.

Der Faserverbundwerkstoff ist hier Faserzement, der aus Zement und zugfesten anorganischen Fasern wie Asbest, Glas- oder Kohlenstofffasern oder organischen Fasern aus Zellulose, Polyethylen oder Polyamid bestehen kann. Faserzementplatten können so hergestellt werden, dass sie wasserdicht und durch ihren Luftporenanteil frostbeständig und feuchtigkeitsregulierend sind und daher problemlos im Nassbereich einsetzbar sind. Dabei weisen sie eine hohe Festigkeit auf, insbesondere eine hohe Druckfestigkeit. Eine weitere mögliche Eigenschaft von Faserzement ist, dass er antistatisch und diffusionsdicht ist. Neben einem guten Schallschutz sind auch die Brandschutzeigenschaften ausgezeichnet, darüber hinaus können Faserzementplatten umweltfreundlich ausgebildet werden und damit wird die Verbundplatte recyclingfähig. Insgesamt sind Faserzementplatten als langlebig und kostengünstig einzustufen.

Ein wesentlicher Vorteil des beschriebenen Systems besteht darin, dass der Träger ohne weitere Schwierigkeit in seiner Größe auf alle bereits vorhandenen Platten angepasst herstellbar ist, da der Träger aus einem großen Flächenmaterial mit der gewünschten Dicke ausgeschnitten werden kann und dieses Ausschneiden auf einer numerisch gesteuerten Schneidmaschine erfolgen kann. Damit kann ohne großen Aufwand für jedes Kaliber der passende Träger bereitgestellt werden und es ist sogar möglich, Fehlchargen von Platten, die eigentlich außerhalb der zulässigen Toleranzen liegen, mit einem passenden Träger zu versehen und einen Bodenbelag aus den Platten dieser Fehlcharge herzustellen.

Die Platte ist eine Keramik-, oder Kunststeinfliese und die Verbindung mit dem Träger ist mittels eines Klebstoffs hergestellt. Dabei liegt die Platte vollflächig auf dem Träger auf, um einen maximale Versteifung der Platte vollflächig auf dem Träger auf, um einen maximale Versteifung der Platte zu bewirken.

Als Klebstoff kann ein kunststoffvergüteter Zementkleber eingesetzt werden. Grundsätzlich können auch andere Klebstoffe wie Hotmelts, PU-Kleber, 2-Komponentenkleber für die Verklebung verwendet werden.

Der Träger weist in seinem Randbereich sowohl seitlich über die Platte hervorstehende Vorsprünge als auch seitlich unter die Platte reichende Ausnehmungen auf, wobei die Vorsprünge und Ausnehmungen des Trägers soweit über die Platte seitlich überstehen beziehungsweise unter dieser liegen, dass aneinandergefügte Verbundplatten mit ihren Vorsprüngen in die Ausnehmungen der jeweils anderen Verbundplatte eingreifen und die Vorsprünge unter jeweils der anderen Verbundplatte liegen.

Mit dieser Ausgestaltung des Trägers ist ein Zusammenfügen zu einem Boden- oder Wandbelag möglich, der über die Trennfuge zwischen benachbarten Platten hinweg stabilisiert ist.

Die Vorsprünge und Aussparungen an den Seiten des Trägers sind derart angeordnet, dass ein Vorsprung auf einer Seite des Trägers einer Ausnehmung auf der gegenüberliegenden Seite des Trägers entspricht. Hierdurch lässt sich ein modulares System mit einer vorgegebenen Verlegerichtung bereitstellen.

Jede Seitenfläche weist eine sich entlang der Verbundplatte in einem Abstand zur Oberseite der Verbundplatte und in einem Abstand zur Unterseite der Verbundplatte erstreckende Nut auf. Diese Nut dient zur Aufnahme eines Verbindungsprofils.

Durch das in die Nut eingesteckte Verbindungsprofil ist gewährleistet, dass eine Verbundplatte mit der benachbarten Verbundplatte verbindbar ist und dass sich somit ein aus mehreren Verbundplatten gebildeter Belag stabilisieren lässt.

Dabei ist die Nut ausschließlich in dem Träger oder der Platte angeordnet oder ist gleichzeitig aus einem Teil der Platte und aus einem Teil des Trägers gebildet.

Die Anordnung der Nut nur in dem Träger hat den Vorteil, dass die Platte nicht in ihrer Dicke geschwächt wird und dass die Bearbeitung des Trägers im Vergleich zur härteren Platte viel einfacher ist. Die Anordnung nur in der Platte hat den Vorteil, dass der Träger nicht geschwächt wird.

Die Anordnung der Nut sowohl in dem Träger als auch in der Platte hat den Vorteil, dass die Verbundplatte in ihrer Dicke dünner ausgeführt werden kann.

Das Verlegesystem weist Verbundplatten mit einer Nut in den Seitenflächen der Verbundplatte auf, die mindestens so tief ist wie die Ausnehmung des Trägers. Dadurch kann eine Entfernung der auf Vorsprüngen des Trägers und im Bereich der Ausnehmungen an der Platte befindlichen Klebeschicht zur Verbindung des Trägers mit der Platte erreicht werden, die ansonsten das Einbringen eines Verbindungsprofils behindern würde.

Vorteilhafterweise kann der Träger an seiner der Platte abgewandten Seite eine Dämmung für Trittschall aufweisen, insbesondere eine Dämmschicht aus Polyethylen-Schaumfolie oder zueinander beabstandete elastisch verformbare Noppen, insbesondere aus Silikon oder aus elastomeren Werkstoffen.

Mit einer Trittschalldämmung lässt sich der Trittschall verringern und es kann im Falle einer Dämmschicht gegebenenfalls eine verbesserte Wärmedämmung bereitgestellt werden. Im Fall der Verwendung von zueinander beabstandeten Noppen kann eine Drainage erreicht werden, wenn die Verbundplatte im Außenbereich verlegt wird.

Vorteilhafterweise kann die Dämmung direkt mit dem Träger durch Kaschieren verbunden sein, insbesondere durch Nasskaschieren mit nassem Klebstoff, durch Trockenkaschieren mit trockenem Klebstoff oder durch Thermokaschieren ohne Klebstoff mit Wärme oder Druck.

Gemäß einer Weiterbildung können die Vorsprünge und Ausnehmungen derart ausgebildet sein, dass sie bei der Verbindung mit einer identischen Platte stets ein Spiel aufweisen.

Die Vorsehung eines Spiels ermöglicht es, denselben Träger für unterschiedliche Größen von Platten zu verwenden, in Fachkreisen auch Kaliber genannt. Das vorhandene Spiel erlaubt dann zwar einen Versatz der Verbundplatten zueinender beim Verlegen, da keine Ausrichtung der Verbundplatten über die Ausnehmungen und Vorsprünge mehr erfolgt, die Verlegbarkeit bleibt aber sichergestellt. Über diesen Spalt kann auch ein Toleranzausgleich von geringfügigen Größenunterschieden der Platten erfolgen.

Vorteilhafterweise können die Vorsprünge in einem seitlich die Platte überragenden Bereich Befestigungsöffnungen aufweisen. Dadurch ist es möglich, die Verbundplatte beim Verlegen am Untergrund zu fixieren, beispielsweise zu verschrauben, und damit eine Wand zu belegen.

Zur Vermeidung eines Höhenversatzes von einer Verbundplatte zur benachbarten Verbundplatte kann die Nut zur Nutzoberfläche der Verbundplatte kalibriert sein.

Das Verbindungsstück kann in Form eines auf den Kopf gestellten Großbuchstabens T ausgebildet sein, wobei die Basis des T an ihren beiden äußeren Enden von den Enden ausgehend nach innen zum Stamm des T hin gerichtete abgewinkelte elastische Lippen aufweisen kann. Über diese Lippen wird eine Befestigung des Verbindungsstücks in der Nut hergestellt. Grundsätzlich können anstelle der Lippen auch elastische Vorsprünge, Noppen oder Leisten vorgesehen werden, die sich beim Einschieben des Verbindungsstücks in eine Nut verformen und so einen Reibschluss herstellen, der besondere Vorteil der Lippen ist jedoch die zusätzliche Wirkung nach Art eines Widerhakens.

Weiterhin kann der Stamm des Großbuchstabens T an seinem von der Basis abgewandten Ende einen sich verbreiternden Abschnitt aus einem Dichtungsmaterial aufweisen. Damit wird die Fuge zwischen zwei benachbarten Verbundplatten elastisch abgedichtet.

Vorteilhafterweise kann die die Lippen und das Dichtungsmaterial tragende Basis aus hartem Kunststoff, insbesondere PVC und das Dichtungsmaterial aus weichem Kunststoff, insbesondere TPE bestehen.

Gegenstand der Erfindung ist also ein Verlegesystem zur Herstellung eines Boden- oder Wandbelags mit Verbundplatten wie vorstehend beschrieben. Derartige Boden- oder Wandbeläge können schnell verlegt und wieder aufgenommen werden.

Zur Stabilisierung des Boden- oder Wandbelags ist zwischen benachbarten Verbundplatten ein Verbindungsstück wie vorstehend beschrieben vorgesehen.

Ein weiterer Gegenstand der Erfindung ist ein Verfahren zur Herstellung einer Verbundplatte eines Verlegesystems wie vorstehend beschrieben, wobei die Verbundplatte aus einer Platte eines Boden- oder Wandbelags und einem an einer Verlegeseite der Platte anzuordnenden Träger mit Vorsprüngen und Ausnehmungen gebildet ist. Um die Verbundplatten untereinander über ein Verbindungsprofil zu verbinden, wird in einer Seitenfläche der Verbundplatte eine Nut in einem vorgegebenen Abstand zur Nutzoberfläche der Verbundplatte eingebracht. Dabei wird an jeder Seitenfläche der Platte eine derartige Nut eingebracht.

Wie bereits erläutert ermöglicht dieser vorgegebene Abstand zur Nutzoberfläche der Platte eine einheitliche Ausrichtung der Verbundplatten zueinander bezüglich ihrer Höhe.

Die Verbundplatte wird mit ihrer Nutzoberfläche auf einen Werkstücktisch aufgelegt und die Nut wird in einem vorgegebenen Abstand zum Werkstücktisch eingebracht. Dadurch ist es auf einfache Weise möglich, die Nut in einem vorgegebenen Abstand zur Nutzoberfläche der Platte anzubringen. Die Nut in der Seitenfläche der Verbundplatte ist mindestens so tief wie die Ausnehmung des Trägers.

Zur Herstellung einer Verbindung der Platte mit dem Träger erfolgt ein Walzenauftrag eines Klebstoffs auf mindestens einer Seite der Platte oder des Trägers. Dies kann mit einer handelsüblichen Walzenauftragsmaschine erfolgen, beispielsweise der Axel Wirth Maschinen GmbH aus 73447 Oberkochen, Aalener Str. 76/80. Anschließend werden die Platte und der Träger zu einander ausgerichtet und gegebenenfalls unter Einwirkung von Druck und/oder Wärme zusammengebracht.

### Kurzbeschreibung der Zeichnung

Das erfindungsgemäße Verlegesystem und das erfindungsgemäße Verfahren werden anhand der Zeichnung erläutert. Es zeigen:
- Fig. 1: einen ersten Träger für eine Verbundplatte,
- Fig. 2: einen zweiten Träger für eine weitere Verbundplatte,
- Fig. 3: einen dritten Träger für eine weitere Verbundplatte als Teil eines Boden- oder Wandbelags,
- Fig. 4: den zweiten Träger aus Fig. 2 als Teil eines Boden- oder Wandbelags,
- Fig. 5: eine erste Ausgestaltung einer Seitenfläche einer Verbundplatte aus einem Träger mit einer Platte mit eingelegtem Verbindungsstück im Schnitt AA aus Fig. 4,
- Fig. 6: eine zweite Ausgestaltung einer Seitenfläche einer Verbundplatte im Schnitt AA aus Fig. 4,
- Fig. 7: eine dritte Ausgestaltung einer Seitenfläche einer Verbundplatte im Schnitt AA aus Fig. 4,
- Fig. 8: die dritte Ausgestaltung im Schnitt BB aus Fig. 4,
- Fig. 9: eine vierte Ausgestaltung einer Seitenfläche einer Verbundplatte im einseitigen Schnitt AA aus Fig. 4,
- Fig. 10: eine weitere Ausgestaltung einer Verbundplatte im Schnitt AA aus Fig. 4 mit Noppen,
- Fig. 11: eine Anordnung der Verbundplatte zur Einbringung einer Nut in einer Seitenfläche gemäß der vierten Ausgestaltung aus Fig. 9,
- Fig. 12: einen Schnitt durch ein Verbindungsstück aus den Fig. 5-8 im Detail,
- Fig. 13: eine schematische Darstellung von stumpf aneinanderstoßenden Verbindungsstücken aus Fig. 12;
- Fig. 14: eine schematische Darstellung von an der Verbundplatte angebrachten und stumpf aneinanderstoßenden Verbindungsstücken aus Fig. 12 und 13;
- Fig. 15: eine schematische Darstellung von an der Verbundplatte angebrachten und auf Gehrung geschnittenen aneinanderstoßenden Verbindungsstücken aus Fig. 12;
- Fig. 16: einen Schnitt entsprechend Schnitt AA aus Fig. 4 durch ein alternatives Verbindungsstück ohne obere Dichtung im Detail,
- Fig. 17: eine schematische Darstellung der Ausgestaltung einer Nuttiefe in der Seitenfläche,
- Fig. 18: die Ausbildung einer Fuge bei zueinander beabstandeten Trägern.

### Ausführungsbeispiele der Erfindung

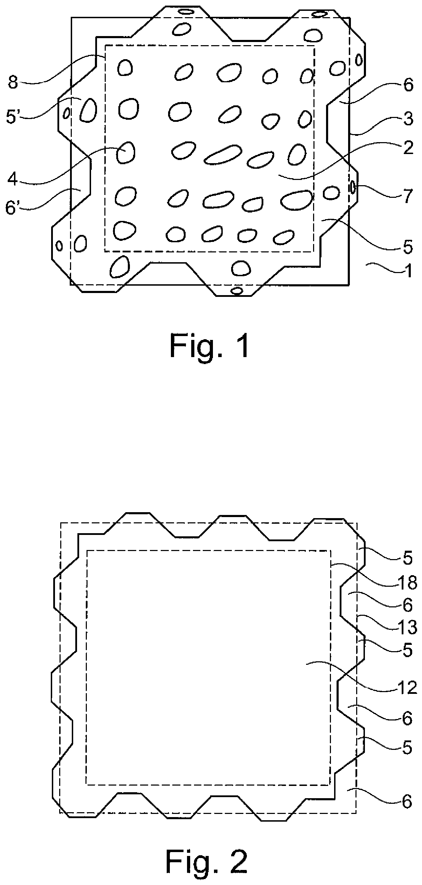

Fig. 1 zeigt eine erfindungsgemäße Verbundplatte 1 von der Verlegeseite der Verbundplatte 1 her gesehen, die einen ersten Träger 2 aus einem Faserverbundwerkstoff, insbesondere aus Faserzement aufweist, wobei der Träger 2 an seiner der Verlegeseite des Trägers abgewandten Seite mit der Verlegeseite einer Platte 3 verbunden ist, deren Kontur in Bereichen einer Verdeckung durch den Träger durchbrochen dargestellt ist. Die Platte kann eine Keramik-, Glas-, Kunststein- oder Natursteinfliese sein.

Der Träger 2 weist an seiner der Platte 3 abgewandten Verlegeseite eine Dämmung für Trittschall auf, die aus zueinander beabstandeten elastisch verformbaren Noppen 4 gebildet ist, welche aus Silikon bestehen können. Die Noppen 4 sind über die gesamte Verlegeseite des Trägers 2 verteilt angeordnet.

Der Träger 2 weist in seinem Randbereich sowohl seitlich über die Platte 3 hervorstehende Vorsprünge 5 als auch seitlich unter die Platte 3 reichende Ausnehmungen 6 auf. Die Vorsprünge 5 und die Ausnehmungen 6 des Trägers 2 stehen soweit seitlich über die Platte 3 beziehungsweise liegen unter dieser, dass aneinandergefügte Verbundplatten mit ihren Vorsprüngen in die Ausnehmungen der jeweils anderen Verbundplatte eingreifen und unter jeweils der anderen Verbundplatte liegen.

Im dargestellten Ausführungsbeispiel sind an jeder Seite zwei Vorsprünge 5 und zwei Ausnehmungen 6 angeordnet, wobei einem Vorsprung 5 auf einer Seite des Trägers 2 eine Ausnehmung 6' auf der gegenüberliegenden Seite des Trägers 2 und einer Ausnehmung 6 auf einer Seite des Trägers 2 einem Vorsprung 5' auf der gegenüberliegenden Seite des Trägers 2 entspricht.

Die Vorsprünge 5, 5' weisen in einem seitlich die Platte 3 überragenden Bereich Befestigungsöffnungen 7 auf, mittels welcher die Verbundplatte beim Verlegen am zu belegenden Untergrund befestigt werden kann.

Weiterhin ist der Verlauf einer sich entlang jeder Seitenfläche der Verbundplatte in einem Abstand zur Oberseite der Verbundplatte und in einem Abstand zur Unterseite der Verbundplatte erstreckenden Nut 8 dargestellt. Diese Nut wird später im Detail erläutert und dient zur Aufnahme eines später dargestellten Verbindungsprofils.

Fig. 2 zeigt einen zweiten Träger 12 für eine weitere erfindungsgemäße Verbundplatte, wobei der Träger am Randbereich jeweils drei Vorsprünge 5 und drei Ausnehmungen 6 aufweist. Die Lage der nicht dargestellten Platte 3 aus Fig. 1 ist durch die äußere Kontur 13 gezeigt, die innere Kontur 18 zeigt die Lage der Nut 8 aus Fig. 1.

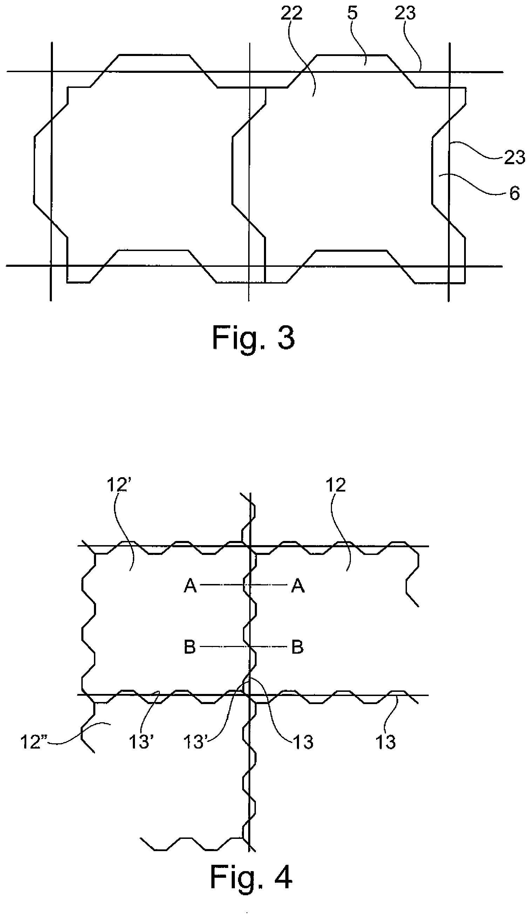

Fig. 3 zeigt einen dritten Träger 22 für eine weitere erfindungsgemäße Verbundplatte als Teil eines Boden- oder Wandbelags, wobei der Träger 22 am Randbereich jeweils nur einen vollständigen Vorsprung 5 oder nur eine vollständige Ausnehmung 6 aufweist. Die Lage der nicht dargestellten Platte 3 aus Fig. 1 ist durch die äußere Kontur 23 gezeigt. Fig. 4 zeigt den zweiten Träger 12 für eine erfindungsgemäße Verbundplatte aus Fig. 2 als Teil eines Boden- oder Wandbelags, das heißt zusammen mit benachbarten Verbundplatten mit den Trägern 12', 12". Die Lage der dazugehörigen nicht dargestellten Platten ist durch die äußere Konturen 13, 13' gezeigt.

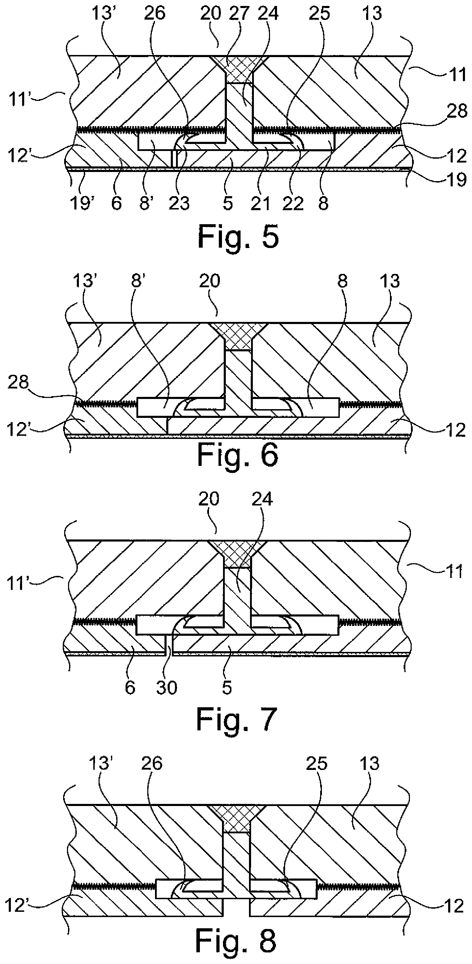

Fig. 5 zeigt eine erste Ausgestaltung von zwei miteinander verbundenen erfindungsgemäßen Verbundplatten 11, 11' im Schnitt entlang der Linie AA aus Fig. 4. Die Verbundplatten 11, 11' bestehen aus einem Träger 12, 12' gemäß Fig. 2 und 4 und aus einer Platte 13, 13', wobei an der Verlegeseite der Träger 12, 12' eine Dämmung in Form einer Dämmschicht 19, 19' angebracht ist. Der Vorsprung 5 des Trägers 12 der Verbundplatte 11 steht seitlich über die Platte 13 hervor und liegt in der Ausnehmung 6 des Trägers 11' bündig an diesem seitlich an.

Die Verbindung der beiden Verbundplatten 11, 11' erfolgt über ein Verbindungsstück 20, das in seinem Querschnitt der Form eines auf den Kopf gestellten Großbuchstabens T entspricht und das in eine Nut 8 an einer Seitenfläche der Verbundplatten 11, 11' eingelegt ist.

Die Basis 21 des T weist an ihren beiden äußeren Enden 22, 23 von den Enden 22, 23 ausgehend nach innen zum Stamm 24 des T hin gerichtete abgewinkelte elastische Lippen 25, 26 auf. Über diese Lippen wird eine Befestigung des Verbindungsstücks in der Nut 8, 8' hergestellt.

Der Stamm 24 des Großbuchstabens T legt durch seine Dicke den Abstand zwischen zwei benachbarten Verbundplatten 11, 11' fest. Der Stamm 24 des Großbuchstabens T weist an seinem von der Basis 21 abgewandten Ende einen sich verbreiternden Abschnitt 27 aus einem Dichtungsmaterial auf. Damit wird die Fuge zwischen zwei benachbarten Verbundplatten 11, 11' von der Oberseite der Verbundplatten 11, 11' her elastisch abgedichtet.

In dieser Ausführungsform befindet sich die Nut 8, 8' ausschließlich in dem Träger 12, 12', die mit einem Klebstoff 28 versehene Verlegeseite der Platte 13, 13' bildet eine Wand der Nut. Es ist auch möglich, die Nut so anzuordnen, dass der Klebstoff auf der Verlegeseite der Platte bei der Herstellung der Nut entfernt wird.

Fig. 6 zeigt eine zweite Ausgestaltung einer Seitenfläche einer erfindungsgemäßen Verbundplatte im Schnitt AA aus Fig. 4, wobei im Unterschied zu Fig. 5 die Nut 8, 8' sowohl in der Platte 13, 13' als auch im Träger 12, 12' liegt. Dies hat den Vorteil, dass der Klebstoff 28 keinen Einfluss auf den Halt und die Lage des Verbindungsstücks 20 hat.

Fig. 7 zeigt eine dritte Ausgestaltung einer Seitenfläche einer erfindungsgemäßen Verbundplatte im Schnitt AA aus Fig. 4, ausgehend von der zweiten Ausgestaltung aus Fig. 6. Dargestellt ist ein Spalt 30 zwischen der Ausnehmung 6 und dem Vorsprung 5 und der Abstand zwischen den Verbundplatten 11, 11' wird allein über den Stamm 24 des Verbindungsstücks 20 beschränkt.

Fig. 8 zeigt eine Ausgestaltung einer Seitenfläche einer erfindungsgemäßen Verbundplatte im Schnitt BB aus Fig. 4, sodass die Träger 12, 12' weder einen Vorsprung noch eine Ausnehmung aufweisen sondern seitlich bündig mit der Platte 13, 13' sind. Die Dämmschicht wurde aus Gründen der Vereinfachung weggelassen.

Es wird ersichtlich, dass das Verbindungsstück zumindest abschnittsweise beide Verbundplatten gleichzeitig stabilisiert und in der Höhe zueinander ausrichtet, wobei wegen der Elastizität der Lippen ein geringes Spiel zugelassen ist.

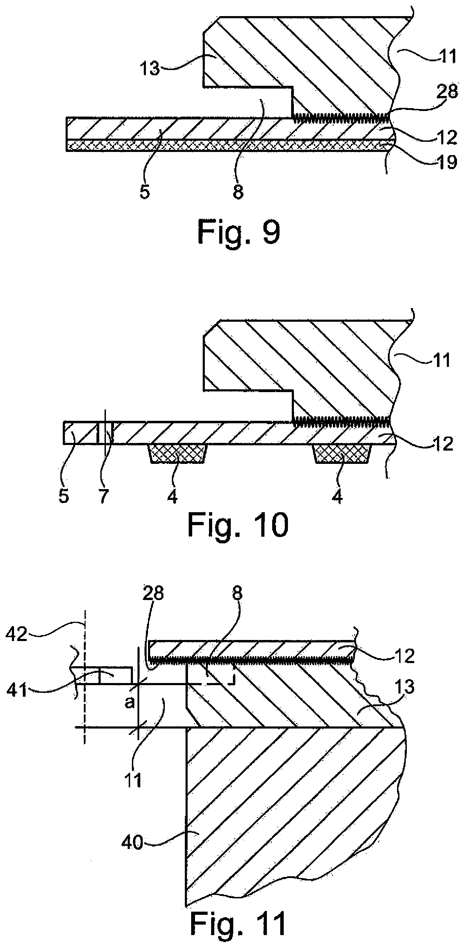

Fig. 9 zeigt eine vierte Ausgestaltung einer Seitenfläche einer erfindungsgemäßen Verbundplatte 11 im einseitigen Schnitt AA aus Fig. 4, wobei die Nut 8 so in der Platte 13 angeordnet ist, dass die Oberseite des Trägers 12 eine Nutwand bildet. Beim Einbringen der Nut kann überschüssiger Klebstoff von der Oberseite des Trägers entfernt werden, sodass sichergestellt wird, dass ein nicht dargestelltes Verbindungsstück ohne Hindernisse in die Nut eingesteckt werden kann. Die Verbundplatte 11 weist an ihrer Verlegeseite eine Dämmschicht 19 auf.

Fig. 10 zeigt die vierte Ausgestaltung aus Fig. 9, wobei die Verbundplatte 11 anstelle der in Fig. 9 gezeigten Dämmschicht 19 die in Fig. 1 dargestellten Noppen 4 und die Öffnung 7 im Vorsprung 5 des Trägers 12 aufweist. Selbstverständlich lässt sich die Öffnung 7 auch in einer Verbundplatte mit einer Dämmschicht verwirklichen. Die Noppen 4 können in dem Fall, wenn sie aus Silikon bestehen, einfach auf den Träger aufgetragen werden, da Silikon selbstklebend ist und an dem Träger haftet.

Fig. 11 zeigt eine Anordnung der erfindungsgemäßen Verbundplatte 11 mit ihrer Nutzoberfläche auf einem Werkstücktisch 40, um mit einem Werkzeug 41 in der Seitenfläche der Verbundplatte 11 die Nut 8 in einem vorgegebenen Abstand a zur Nutzoberfläche der Platte 13 einzubringen. Die Ausrichtung der Lage der Nut 8 an der Nutzoberfläche der Verbundplatte 11 führt dazu, dass sich die Verbundplatten stets von einer gleichmäßigen Nutzfläche ausgehend zueinander ausrichten, unabhängig von der Beschaffenheit des Trägers 12 oder der Klebstoffschicht 28.

Als Werkzeug 41 kommt ein Sägeblatt oder eine Schleifscheibe mit einer Drehachse 42 senkrecht zur Auflagefläche am Werkstücktisch bzw. zur Nutzfläche der Verbundplatte in Frage, es kann aber auch ein Fingerfräser oder Fingerschleifer mit einer Werkstückachse parallel zur Auflagefläche am Werkstücktisch bzw. zur Nutzfläche der Verbundplatte zum Einsatz kommen.

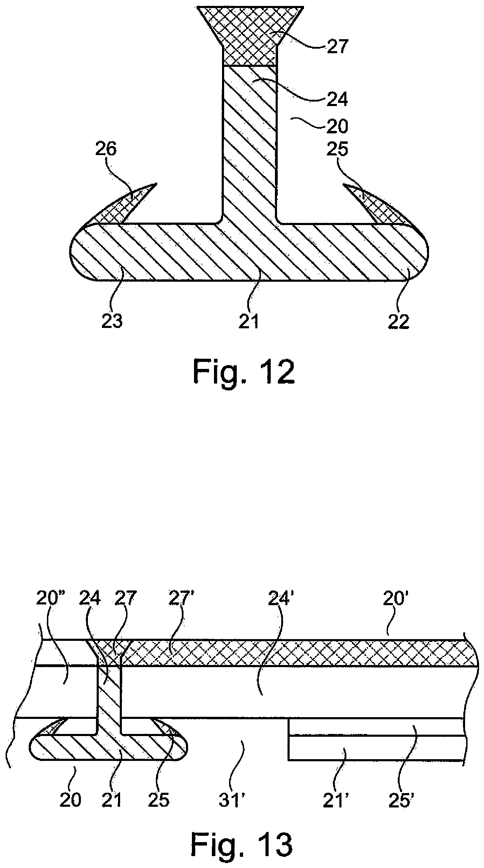

Fig. 12 zeigt einen Schnitt durch das Verbindungsstück aus den Fig. 5-9 im Detail. Die Basis 21 des T weist an ihren beiden äußeren Enden 22, 23 von den Enden 22, 23 ausgehend nach innen zum Stamm 24 des T hin gerichtete abgewinkelte elastische Lippen 25, 26 auf. Über diese Lippen wird eine Befestigung des Verbindungsstücks hergestellt, wobei sich die Lippen zur Basis hin verformen lassen. Der Stamm 24 des Großbuchstabens T weist an seinem von der Basis 21 abgewandten Ende einen sich verbreiternden Abschnitt 27 aus einem Dichtungsmaterial auf.

Die die Lippen tragende Basis und der das Dichtungsmaterial tragende Stamm bestehen aus hartem Kunststoff oder Duroplasten, insbesondere aus PVC und die Lippen und das Dichtungsmaterial bestehen aus weichem Kunststoff oder Elastomeren, insbesondere aus TPE. Die Herstellung des Verbindungsstücks kann in einem Co-Extrusionsverfahren erfolgen, bei dem beide Kunststoffe gleichzeitig verarbeitet werden. Dadurch lassen sich harte und weiche Kunststoffe zu einem Profil kombinieren und auch die Kombination von Kunststoffen mit unterschiedlichen Farben sind möglich.

Fig. 13 zeigt eine schematische Darstellung von aneinanderstoßenden Verbindungsstücken 20 aus Fig. 12, wobei sich von dem in die Zeichenebene hinein verlaufende Verbindungsstück 20 seitlich angeordnete Verbindungsstücke 20', 20" weg erstrecken. Das Verbindungsstück 20 besteht wie bereits beschrieben aus der Basis 21, den an der Basis angeordneten Lippen 25, 26, dem mit der Basis verbundenen Stamm 24 und dem daran angebrachten Dichtabschnitt 27. Auch das seitlich angeordnete Verbindungsprofil 20' weist diese Funktionsabschnitte auf, von denen die Basis 21', die an der Basis angeordnete Lippe 25', der mit der Basis verbundene Stamm 24' und der daran angebrachte Dichtabschnitt 27' dargestellt sind. Um ein sauberes Aneinandersetzen der Verbindungsstücke 20, 20' zu ermöglichen, ist das seitlich angeordnete Verbindungsstück 20' im Bereich der Basis 21' und des Stamms 24' ausgekehlt, sodass sich eine Kehle 31' ausgebildet hat, in der die Basis 21 und die Lippe 5 des Verbindungsstücks 20 liegt.

Bei dieser Art des Aneinandersetzens der Verbindungsstücke kann sich ein Verbindungsstück über mehrere Verbundplatten hinweg erstrecken und diese insgesamt stabilisieren, sodass ein gleichmäßiger Verlauf des so gebildeten Bodenbelags erreicht werden kann.

Anstelle des dargestellten geraden Stoßes kann auch ein Stoß auf Gehrung vorgesehen werden.

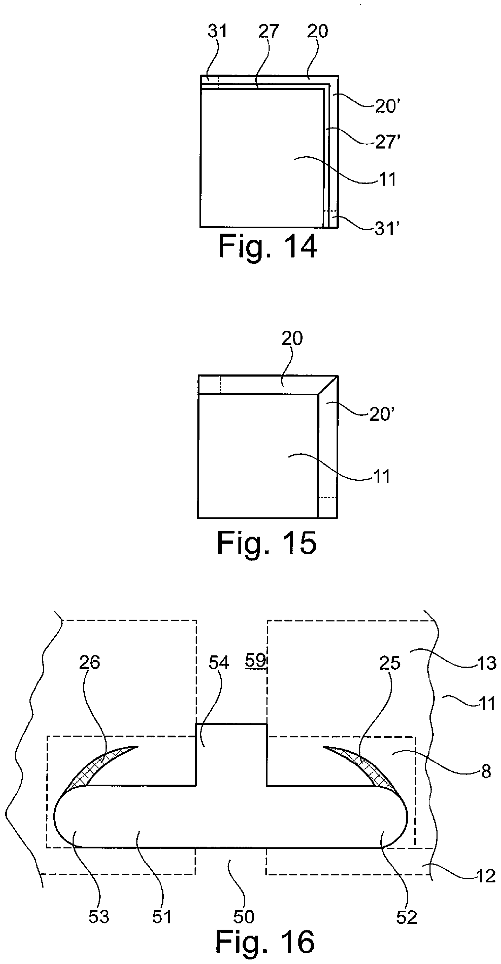

Fig. 14 zeigt eine schematische Darstellung von an der Verbundplatte 11 angebrachten und stumpf aneinanderstoßenden Verbindungsstücken 20, 20' aus Fig. 12 und 13, wobei aus Gründen der Übersichtlichkeit die Vorsprünge des Trägers nicht gezeigt sind. Es ist zur Herstellung eines Boden- oder Wandbelags ausreichend, wenn die Verbundplatte 11 nur an zwei aneinanderstoßenden Seiten mit einem Verbindungsstück 20, 20' versehen ist, da die benachbarte Verbundplatte über dieses Verbindungsstück 20, 20' an den nicht mit einem Verbindungsstück versehenen Seitenflächen verbunden werden kann. Derartig vorkonfektionierte Verbundplatten benötigen dann keine weiteren Verbindungsstücke mehr.

Damit das Verbindungsstück der nicht dargestellten benachbarten Verbundplatte die Verbindung herstellen kann, ist das Vebindungsstück an den Enden, die den Seitenflächen ohne Verbindungsstück zugewandt sind, mit der Kehle 31, 31' versehen.

Fig. 15 zeigt eine schematische Darstellung von an der Verbundplatte 11 angebrachten und im Unterschied zu Fig. 14 auf Gehrung geschnittenen aneinanderstoßenden Verbindungsstücken.

Fig. 16 zeigt einen Schnitt durch ein alternatives Verbindungsstück 50 ohne obere Dichtung im Detail, wobei zwei Verbundplatten in einem Schnitt entlang der Linie BB aus Fig. 4 skizziert sind. An einer Basis 51 sind an den Enden 52, 53 wieder die Lippen 25, 26 angeordnet, ein Stamm 54 erstreckt sich von der Basis weg zumindest über eine solche Höhe, dass die Nut 8 in der Verbundplatte überdeckt wird, wobei jedoch ein deutlicher Abstand zur Nutzseite der Verbundplatte bleibt. In die dadurch gebildete Fuge 59 kann nach dem Verlegen der Verbundplatten ein handelsübliches Fugenmittel in herkömmlicher Weise eingebracht werden, um die Fuge 59 zu schließen. Auch hier kann sich ein Verbindungsstück über mehrere Verbundplatten hinweg erstrecken und diese insgesamt stabilisieren.

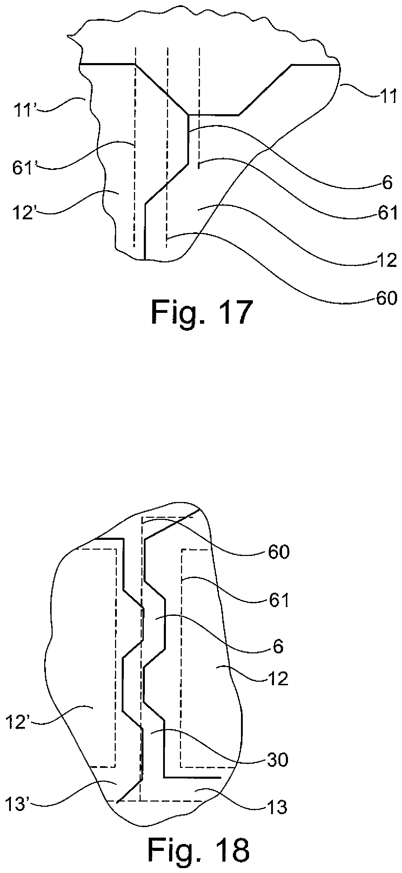

Fig. 17 zeigt eine schematische Darstellung der Ausgestaltung einer Nuttiefe in der Seitenfläche anhand von zwei benachbarten Verbundplatten 11, 11' mit dem erfindungsgemäßen Träger 12, 12', deren nicht dargestellte Platten entlang der Linie 60 aneinander stoßen, wobei bei dieser schematischen Betrachtung der Dichtabschnitt in der Fuge vernachlässigt wird. Die Nut 8 aus Fig. 1 und Fig. 5-9 erstreckt sich bis zur Linie 61, 61' und damit weiter als die Aussparung 6 im Träger 12.

Fig. 18 zeigt die schematische Darstellung aus Fig. 17 bei Ausbildung einer Fuge durch zueinander beabstandete Träger 12, 12'. Obwohl die Platten 13, 13' entlang der Linie 60 zusammenstoßen, bleiben die Träger 12, 12' zueinander beabstandet und es bildet sich der auch in Fig. 7 und 8 dargestellte Spalt 30 aus.

## Patentansprüche

1. Verlegesystem zur Herstellung eines Boden- oder Wandbelags umfassend mindestens zwei identische Verbundplatten (11,11'), welche eine Platte (13,13') eines Boden- oder Wandbelags und einen an der Verlegeseite der Platte (13,13') angeordneten Träger (12,12') aufweisen, wobei die Platte (13,13') vollflächig auf dem Träger (12,12') aufliegt und wobei die Verbindung mit dem Träger (12,12') mittels eines Klebstoffs (28) hergestellt ist, wobei der Träger (12,12') in seinem Randbereich sowohl seitlich über die Platte (13,13') hervorstehende Vorsprünge (5) als auch seitlich unter die Platte (13,13') reichende Ausnehmungen (6) aufweist, wobei die Vorsprünge (5) und Ausnehmungen (6) des Trägers (12,12') soweit über die Platte (13,13') seitlich überstehen beziehungsweise unter dieser liegen, dass aneinandergefügte Verbundplatten (11,11') mit ihren Vorsprüngen (5) in die Ausnehmungen (6) der jeweils anderen Verbundplatte (11,11') eingreifen und unter jeweils der anderen Verbundplatte (11,11') liegen, **dadurch gekennzeichnet, dass**
dass der Träger (12, 12') aus Faserzement besteht,
dass die Platte (13, 13') eine Keramik- oder Kunststeinfliese ist,
dass das Verlegesystem ferner ein Verbindungsstück (20) umfasst,
dass jede Seitenfläche der Verbundplatten (11, 11') eine sich entlang der Verbundplatten (11,11') in einem Abstand zur Oberseite der Verbundplatte (11,11') und in einem Abstand zur Unterseite der Verbundplatten (11,11') erstreckende Nut (8,8') zur Aufnahme des Verbindungsstücks (20) aufweist, dass die Nut (8,8') ausschließlich in dem Träger (12,12') angeordnet oder gleichzeitig aus einem Teil der Platte (13,13') und aus einem Teil des Trägers (12,12') gebildet ist und dass die Nut (8,8') in der Seitenfläche der Verbundplatten (11,11') mindestens so tief wie die Ausnehmung (6,6') des Trägers (12,12') ist.

2. Verlegesystem nach Anspruch 1, **dadurch gekennzeichnet, dass** als Klebstoff (28) ein kunststoffvergüteter Zementkleber eingesetzt ist.

3. Verlegesystem nach einem der Ansprüche 1 bis 2, **dadurch gekennzeichnet, dass** der Träger (12,12') an seiner der Platte (13,13') abgewandten Seite eine Dämmung (4; 19,19') für den Trittschall aufweist, insbesondere eine Dämmschicht (19,19') aus Polyethylen-Schaumfolie oder zueinander beabstandete elastisch verformbare Noppen (4), insbesondere aus Silikon.

4. Verlegesystem nach Anspruch 3, **dadurch gekennzeichnet, dass** die Dämmschicht (19,19') direkt mit dem Träger (12,12') durch Kaschieren verbunden ist, insbesondere durch Nasskaschieren mit nassem Klebstoff, durch Trockenkaschieren mit trockenem Klebstoff oder durch Thermokaschieren ohne Klebstoff mit Wärme oder Druck.

5. Verlegesystem nach einem der Ansprüche 1 bis 4, **dadurch gekennzeichnet, dass** die Vorsprünge (5) und Ausnehmungen (6) an den Seiten des Trägers (12,12') derart angeordnet sind, dass ein Vorsprung auf einer Seite des Trägers einer Ausnehmung (6) auf der gegenüberliegenden Seite des Trägers entspricht.

6. Verlegesystem nach einem der Ansprüche 1 bis 5, **dadurch gekennzeichnet, dass** die Vorsprünge (5) und Ausnehmungen derart ausgebildet sind, dass sie bei der Verbindung mit einer identischen Verbundplatte (11,11') stets ein Spiel aufweisen.

7. Verlegesystem nach einem der Ansprüche 1 bis 6, **dadurch gekennzeichnet, dass** die Vorsprünge (5) in einem seitlich die Platte (13,13') überragenden Bereich Befestigungsöffnungen (7) aufweisen.

8. Verlegesystem nach einem der Ansprüche 1 bis 7, **dadurch gekennzeichnet, dass** die Nut (8,8') zur Oberseite der Verbundplatten (11,11') zur Vermeidung einer Überzahnung kalibriert ist.

9. Verlegesystem nach einem der Ansprüche 1 bis 8, **dadurch gekennzeichnet, dass** das Verbindungsstück (20) in Form eines auf den Kopf gestellten Großbuchstaben T ausgebildet ist.

10. Verfahren zur Herstellung einer Verbundplatte (11,11') eines Verlegesystem nach einem der Ansprüche 1 bis 9, wobei die Verbundplatte (11,11') aus einer Platte (13,13') eines Boden- oder Wandbelags und einem an einer Verlegeseite der Platte (13,13') anzuordnenden Träger (12,12') gebildet ist, **dadurch gekennzeichnet, dass** in einer Seitenfläche der Verbundplatte (11,11') eine Nut (8,8') in einem vorgegebenen Abstand a zur Nutzoberfläche der Platte (13,13') eingebracht wird, dass die Verbundplatte (11,11') mit einer Nutzoberfläche der Platte (13,13') auf einen Werkstücktisch (40) aufgelegt wird, dass die Nut (8,8') in einem vorgegebenen Abstand a zum Werkstücktisch (40) eingebracht wird und dass die Nut (8,8') in der Seitenfläche der Verbundplatte (11,11') mindestens so tief wie die Ausnehmung (6,6') des Trägers (12,12') ist.

11. Verfahren nach Anspruch 10, **dadurch gekennzeichnet, dass** zur Verbindung der Platte (13,13') mit dem Träger (12,12') ein Walzenauftrag eines Klebstoffs (28) auf mindestens einer Seite der Platte (13,13') oder des Trägers (12,12') erfolgt.

## Claims

1. Laying system for producing a floor or wall covering comprising at least two identical composite plates (11, 11') which have a plate (13, 13') of a floor or wall covering and a support (12, 12') arranged on the side on which the plate (13, 13') contacts the floor or wall, wherein the plate (13, 13') rests on the support (12, 12') with the entire surface and wherein the connection to the support (12, 12') is established by means of an adhesive (28), wherein the support (12, 12') has projections (5) protruding in its edge region and also laterally beyond the plate (13, 13') and also has recesses (6) extending laterally under the plate (13, 13'), wherein the projections (5) and recesses (6) of the support (12, 12') project laterally beyond the plate (13, 13') or lie so far under the same that joined composite plates (11, 11') engage with their projections (5) into the recesses (6) of the respectively other composite plate (11, 11') and lie under the respectively other composite plate (11, 11'), **characterized in that** the support (12, 12') consists of fibrous cement, the plate (13, 13') is a ceramic or plastic tile, the laying system further comprises a connection piece (20), each lateral surface of the composite plates (11, 11') has a groove (8, 8') extending along the composite plates (11, 11') at a distance to the upper side of the composite plate (11, 11') and at a distance to the lower side of the composite plates (11, 11') for accommodating the connection piece (20), the groove (8, 8') is arranged exclusively in the support (12, 12') or is formed simultaneously from a part of the plate (13, 13') and from a part of the support (12, 12'), and the groove (8, 8') is at least as deep in the lateral surface of the composite plates (11, 11') as the recess (6, 6') of the support (12, 12').

2. Laying system according to claim 1, **characterized in that** a polymer-modified cement adhesive is used as the adhesive (28).

3. Laying system according to any one of claims 1 to 2, **characterized in that** the support (12, 12') has insulation (4; 19, 19') for impact sound on the side facing the plate (13, 13'), in particular an insulating layer (19, 19') made from polyethylene foam sheet or elastically-deformable nubs (4), in particular made from silicone, spaced apart from each other.

4. Laying system according to claim 3, **characterized in that** the insulating layer (19, 19') is connected directly to the support (12, 12') by lamination, in particular by wet lamination using wet adhesive, by dry lamination using dry adhesive, or by thermolamination without adhesive using heat or pressure.

5. Laying system according to any one of claims 1 to 4, **characterized in that** the projections (5) and recesses (6) are arranged on the sides of the support (12, 12') in such a way that a projection on a side of the support corresponds to a recess (6) on the opposite side of the support.

6. Laying system according to any one of claims 1 to 5, **characterized in that** the projections (5) and recesses are designed in such a way that they always have play in the connection to an identical composite plate (11, 11').

7. Laying system according to any one of claims 1 to 6, **characterized in that** the projections (5) have fastening openings (7) in a region projecting laterally to the plate (13, 13').

8. Laying system according to any one of claims 1 to 7, **characterized in that** the groove (8, 8') is calibrated to the upper side of the composite plate (11, 11') to prevent height differences.

9. Laying system according to any one of claims 1 to 8, **characterized in that** the connection piece (20) is designed in the shape of an upside-down capital T.

10. Method for producing a composite plate (11, 11') of a laying system according to any one of claims 1 to 9, wherein the composite plate (11, 11') is formed from a plate (13, 13') of a floor or wall covering and a support (12, 12') arranged on the side on which the plate (13, 13') contacts the floor or wall, **characterized in that** a groove (8, 8') is introduced in a lateral surface of the composite plate (11, 11') at a predetermined distance a to the useable surface of the plate (13, 13'), the composite plate (11, 11') with a useable surface of the plate (13, 13') is laid onto a workpiece table (40), the groove (8, 8') is introduced in a predetermined distance a to the workpiece table (40), and the groove (8, 8') is at least as deep in the lateral surface of the composite plate (11, 11') as the recess (6, 6') of the support (12, 12').

11. Method according to claim 10, **characterized in that** a roller application of an adhesive (28) is carried out on at least one side of the plate (13, 13') or of the support (12, 12') to connect the plate (13, 13') to the support (12, 12').

## Revendications

1. Système de pose pour fabriquer un revêtement de sol ou mural comprenant au moins deux panneaux composites (11, 11') identiques qui présentent un panneau (13, 13') d'un revêtement de sol ou mural et un support (12, 12') disposé sur le côté de pose du panneau (13, 13'), dans lequel le panneau (13, 13') repose par toute sa surface sur le support (12, 12') et dans lequel la liaison avec le support (12, 12') est réalisée au moyen d'un adhésif (28), dans lequel le support (12, 12') présente sur son bord tant des saillies (5) faisant saillie latéralement sur le panneau (13, 13') que des évidements (6) atteignant latéralement sous le panneau (13, 13'), dans lequel les saillies (5) et les évidements (6) du support (12, 12') font saillie si loin sur le panneau (13, 13'), respectivement, reposent si loin sous celui-ci que des panneaux composites (11, 11') joints les uns contre les autres se mettent en prise par leurs saillies (5) dans les évidements (6) de l'autre panneau composite (11, 11') respectif et reposent sous l'autre panneau composite (11, 11') respectif, **caractérisé en ce que** le support (12, 12') est en fibrociment, que le panneau (13, 13') est un carreau de céramique ou de pierre artificielle, que le système de pose comprend en outre une pièce de liaison (20), que chaque côté des panneaux composites (11, 11') présente une rainure (8, 8') s'étendant le long des panneaux composites (11, 11') à une distance de la surface du panneau composite (11, 11') et à une distance de la sous-face des panneaux composites (11, 11') pour recevoir la pièce de liaison (20), que la rainure (8, 8') est disposée exclusivement dans le support (12, 12') ou est formée parallèlement d'une partie du panneau (13, 13') et d'une partie du support (12, 12') et que la rainure (8, 8') dans le côté des panneaux composites (11, 11') est au moins aussi profonde que l'évidement (6, 6') du support (12, 12').

2. Système de pose selon la revendication 1, **caractérisé en ce qu'**une colle à ciment enrichie en plastique est employée en tant qu'adhésif (28).

3. Système de pose selon l'une des revendications 1 à 2, **caractérisé en ce que** le support (12, 12') présente sur son côté détourné du panneau (13, 13'), une isolation (4 ; 19, 19') pour les bruits d'impact, en particulier une couche isolante (19, 19') en film de mousse de polyéthylène ou des picots (4) élastiques déformables distants les uns des autres, en particulier en silicone.

4. Système de pose selon la revendication 3, **caractérisé en ce que** la couche isolante (19, 19') est reliée directement au support (12, 12') par contre-collage, en particulier par contre-collage humide avec de l'adhésif humide, par contre-collage à sec avec de l'adhésif sec ou par contre-collage thermique sans adhésif par chaleur ou pression.

5. Système de pose selon l'une des revendications 1 à 4, **caractérisé en ce que** les saillies (5) et évidements (6) sont ainsi disposés sur les côtés du support (12, 12') qu'une saillie sur un côté du support correspond à un évidement (6) sur le côté opposé du support.

6. Système de pose selon l'une des revendications 1 à 5, **caractérisé en ce que** les saillies (5) et évidements sont ainsi conçus qu'ils présentent constamment un jeu lors de la liaison avec un panneau composite (11, 11') identique.

7. Système de pose selon l'une des revendications 1 à 6, **caractérisé en ce que** les saillies (5) présentent des ouvertures de fixation (7) dans une partie faisant saillie latéralement du panneau (13, 13').

8. Système de pose selon l'une des revendications 1 à 7, **caractérisé en ce que** la rainure (8, 8') est calibrée par rapport à la surface des panneaux composites (11, 11') pour éviter une sur-dentation.

9. Système de pose selon l'une des revendications 1 à 8, **caractérisé en ce que** la pièce de liaison (20) est en forme de lettre T posée sur la tête.

10. Procédé pour la fabrication d'un panneau composite (11, 11') d'un système de pose selon l'une des revendications 1 à 9, dans lequel le panneau composite (11, 11') est formé par un panneau (13, 13') d'un revêtement de sol ou mural et par un support (12, 12') à placer sur un côté de pose du panneau (13, 13'), **caractérisé en ce que** dans un côté du panneau composite (11, 11'), une rainure (8, 8') est pratiquée à une distance prédéfinie a par rapport à la surface utile du panneau (13, 13'), que le panneau composite (11, 11') est placé avec une surface utile du panneau (13, 13') sur une table de pièce (40), que la rainure (8, 8') est pratiquée à une distance prédéfinie a par rapport à la table de pièce (40) et que la rainure (8, 8') dans le côté du panneau composite (11, 11') est au moins aussi profonde que l'évidement (6, 6') du support (12, 12').

11. Système de pose selon la revendication 10, **caractérisé en ce que** pour relier le panneau (13, 13') au support (12, 12'), un adhésif (28) est appliqué au rouleau sur au moins un côté du panneau (13, 13') ou du support (12, 12').
